# DEMANDE DE BREVET EUROPEEN

(11) **EP 2 730 958 A1**
(43) Date de publication de la demande: **14.05.2014**
(21) Numéro de dépôt: 12290385.9
(22) Date de dépôt: 07.11.2012
(51) Int. Cl.: G02B 6/12, H04B 10/61

(54) **Détecteur cohérent amplifié**

(71) Demandeur: Alcatel Lucent, 75007 Paris (FR)
(72) Inventeur: Caillaud, Christophe, 91620 Nozay (FR); Achouche, Mohand, 91460 Marcoussis (FR); Glastre Lemaitre, Genevieve, 91460 Marcoussis (FR)
(74) Mandataire: Mouney, Jérôme

(57) **Abrégé**

**Un détecteur cohérent amplifié monolithique a au moins un mixeur cohérent incluant un diviseur à interférences multimodes (28a, 28b), au moins un amplificateur optique à semiconducteur (26a, 26b) reliée au mixeur cohérent, quatre photodiodes (30a-h) reliées au mixeur cohérent, dans lequel l'amplificateur optique et le mixeur cohérent sont sous la forme d'une hétérostructure enterrée, et les photodiodes sont du type à gravure profonde.**

## Description

La présente invention se rapporte au domaine des dispositifs optoélectroniques de réception de signaux optiques numériques haut débit pour applications en télécommunications Elle concerne en particulier un détecteur cohérent ayant un amplificateur optique intégré.

Les détecteurs optoélectroniques de signaux optiques comportent habituellement au moins une diode photoréceptrice et sont précédés d'un amplificateur optique. Un préamplificateur optique est souvent utilisé pour augmenter la sensibilité des photodétecteurs, et ainsi améliorer la distance de transmission dans les systèmes de communications numériques.

Plus récemment on a développé la modulation à quatre niveaux de phase couplée à du multiplexage en polarisation PDM-QPSK (pour « Polarisation Division Multiplexing - Quadrature Phase Shift Keying » en anglais) avec détection cohérente qui est largement utilisé pour les systèmes de communication à haut débit et à longue distance. Elle nécessite une architecture de détecteurs complexe comprenant de nombreux composants optiques. L'intégration monolithique de l'ensemble des composants optiques du détecteur dans une seule puce InP est particulièrement intéressante pour réduire le coût et la taille du détecteur, et augmenter sa fiabilité. Des circuits intégrés photoniques PIC (pour « Photonic Integrated Circuit » en anglais) ont donc été développés pour la détection cohérente. Ils comprennent des photodiodes et des mixeurs cohérents.

L'intégration monolithique d'un amplificateur optique à semiconducteur SOA (pour « Semiconductor Optical Amplifier » en anglais) en tant que pré-amplificateur optique dans un détecteur cohérent réduit le coût et la taille du terminal détecteur par rapport à une solution avec un amplificateur à fibre dopée à l'erbium EDFA (pour « Erbium Doped Fiber Amplifier » en anglais) externe associé à un détecteur cohérent comportant des photodiodes et des mixeurs cohérents.

Une solution connue permet d'intégrer un amplificateur optique SOA dans un détecteur cohérent. Pour un signal optique ayant un seul mode de polarisation, le détecteur cohérent comporte un mixeur cohérent utilisant des coupleurs à interférences multimodes MMI combinés à des déphaseurs, quatre photodiodes, un oscillateur local et deux amplificateurs SOA agissant comme préamplificateurs. Une technologie de gravure peu profonde, dite « shallow-ridge », est utilisée avec une région active à puits quantique situés au-dessus de la couche guidante de l'amplificateur SOA(« offset quantum well » en anglais) qui est commune à l'amplificateur optique SOA et aux photodiodes, ce qui permet de simplifier le procédé de fabrication.

Cependant, la bande passante électrique à 3dB des photodiodes est limitée (≈ 10-15 GHz) en raison de la capacité parasite de leur structure à gravure peu profonde « shallow-ridge ». En outre, la région active des photodiodes, qui doit être épaisse de façon à assurer une haute sensibilité et une faible capacité, et la région active de l'amplificateur optique SOA, qui doit être mince de façon à assurer un faible facteur de bruit et une bonne linéarité, ne peuvent pas être optimisées séparément. L'approche impliquant une région à puits quantique située au-dessus de la couche guidante de l'amplificateur SOA conduit aussi à un très faible confinement du champ optique dans la zone active, ce qui induit généralement d'une part une forte dépendance à la polarisation de la lumière (PDL) qui limite la sensibilité du détecteur, et d'autre part un faible gain de l'amplificateur SOA qui pourrait être compensé au prix d'une surconsommation d'énergie électrique. Enfin, la structure à gravure peu profonde « shallow-ridge » induit généralement une perte de couplage élevée qui augmente le facteur de bruit de l'amplificateur SOA.

La présente invention a pour but d'éliminer les inconvénients de l'art antérieur, et en particulier de proposer un détecteur cohérent amplifié ayant une moindre dépendance à la polarisation de la lumière (PDL) et une bande passante électrique élargie.

L'invention a encore pour but de proposer un détecteur cohérent amplifié intégré compact dont la fabrication est plus aisée et moins coûteuse.

L'objet de la présente invention est un détecteur cohérent amplifié monolithique ayant
- au moins un mixeur cohérent incluant un diviseur à interférences multimodes, et
- au moins un amplificateur optique à semiconducteur reliée au mixeur cohérent,
- quatre photodiodes reliées au mixeur cohérent,

L'amplificateur optique et le mixeur cohérent sont sous la forme d'une hétérostructure enterrée. Les photodiodes sont du type à gravure profonde.

Une configuration à hétérostructure enterrée BH (pour « Buried Heterostructure » en anglais) comprend différentes couches, ou régions, en matériau semiconducteur avec différentes structures cristallines correspondant à différentes énergies de bande interdite. Une hétérostructure est dite enterrée lorsqu'elle est entourée d'une matrice en matériau semiconducteur. Une hétérostructure enterrée est utilisée de préférence dans un amplificateur optique à semiconducteur SOA, car elle permet une meilleure dissipation thermique et une diminution des pertes optiques par rapport aux structures à gravure peu profonde « shallow-ridge » et à gravure profonde « deep-ridge ». En outre, on obtient plus facilement une plus faible dépendance à la polarisation et une plus faible perte de couplage avec la fibre optique lorsqu'on utilise une hétérostructure enterrée plutôt que des structures à gravure peu profonde « shallow-ridge » et à gravure profonde « deep-ridge ». Les matériaux préférés pour la fabrication d'un amplificateur à hétérostructure enterrée BH-SOA sont InGaAsP et InGaAs.

Selon un aspect, le détecteur comprend en outre une entrée pour chacun des modes de propagation du signal optique contenant les données à réceptionner, chaque entrée étant respectivement reliée à un amplificateur optique.

Selon un autre aspect, le détecteur comprend en outre une entrée pour un signal de référence provenant d'un oscillateur local reliée à un diviseur du signal de référence.

Selon encore un autre aspect, une sortie d'amplificateur optique et une sortie du diviseur du signal de référence sont reliées au mixeur cohérent.

Selon un mode de réalisation particulier, le détecteur comporte des structures verticales adjacentes suivantes :
- une première structure est composée d'un guide d'onde passif à faible confinement, ou semelle, placée entre deux couches de InP dopé n,
- une deuxième structure d'amplificateur optique comprend un guide d'onde actif, disposé entre deux couches de confinement, qui est placé au-dessus de la semelle encadrée de couches de InP dopé n,
- une troisième structure de mixeur cohérent comprend un guide d'onde passif à fort confinement, recouvert d'une couche mince de InP dopé n, qui est placé au-dessus de la semelle encadrée de couches de InP dopé n,
les première, deuxième et troisième structures étant enterrées dans une matrice de InP dopé p.

Le détecteur comporte en outre les structures suivantes :
- une quatrième structure de courte section comprend un guide d'onde passif à fort confinement, recouvert d'une couche de InP dopé n, qui est placé au-dessus de la semelle encadrée de couches de InP dopé n,
- une cinquième structure comprend des couches de photodiode qui sont placées au-dessus du guide d'onde passif à fort confinement recouvert de la couche de InP dopé n et de la semelle encadrée de couches de InP dopé n.

Le détecteur cohérent monolithique compact, ayant des pré-amplificateurs optiques intégrés, présente une faible dépendance à la polarisation de la lumière (PDL) (= 1 dB) et une bande passante électrique élargie (> 25 GHz). Par rapport aux systèmes actuels qui associent un module EDFA, au moyen de fibres optiques et de connecteurs, à un détecteur cohérent, ce détecteur cohérent amplifié monolithique compact a comme avantage de diminuer sensiblement la complexité du dispositif, sa taille et sa consommation d'énergie. Il permet en outre d'économiser le coût de l'ajout d'un amplificateur EDFA.

Selon une variante, le détecteur comporte un adaptateur de mode optique, placé à chaque entrée du signal optique, qui couple le signal optique provenant de la semelle avec le guide d'onde actif de l'amplificateur optique.

Selon une autre variante, le détecteur comporte un adaptateur de mode optique, placé à l'entrée du signal de référence provenant d'un oscillateur local, qui couple le signal optique provenant de la semelle avec le guide d'onde passif à fort confinement du mixeur cohérent.

De préférence la transition permettant le couplage est réalisée par un biseau du guide d'onde.

Avantageusement, le guide d'onde actif entouré de couches de confinement de l'amplificateur optique et le guide d'onde passif à fort confinement du mixeur cohérent ont un mode guidé similaire et une épaisseur du même ordre de manière à favoriser le couplage.

Le détecteur cohérent amplifié compact est utilisable dans tous les produits qui utilisent une détection cohérente, et notamment les produits DWDM (pour « Dense Wavelength Division Multiplexing » en anglais) pour les longues distances.

L'invention a aussi, pour objet un procédé de fabrication d'un détecteur cohérent amplifié monolithique comprenant les étapes suivantes :
- on dépose des couches superposées composant l'hétérostructure,
- on réalise en une seule étape de lithographie et gravure le guide d'onde actif entouré de couches de confinement de l'amplificateur optique et le guide d'onde passif à fort confinement du mixeur cohérent,
- on réalise un adaptateur de mode optique par gravure de la semelle,
- on enterre l'ensemble composé de la semelle, l'amplificateur optique et le mixeur cohérent, dans un matériau InP dopé p,

De préférence le procédé comprend en outre les étapes suivantes :
- on retire la matrice de InP dopé p dans une zone réservée,
- on fait croître des couches de photodiode dans la zone réservée,
- on réalise la photodiode par la technique de gravure profonde jusqu'à la couche de InP dopé n.

D'autres caractéristiques et avantages de la présente invention apparaîtront à la lecture de la description qui suit d'un mode de réalisation, donné bien entendu à titre illustratif et non limitatif, et dans le dessin annexé sur lequel
- la figure 1 illustre en vue schématique le principe de la détection cohérente,
- la figure 2 illustre en vue schématique l'architecture d'un détecteur cohérent amplifié monolithique,
- les figures 3a et 3b illustrent schématiquement et en coupe une vue partielle du détecteur cohérent amplifié monolithique de la figure 2,
- la figure 4 illustre en vue schématique de dessus la zone d'adaptation de mode optique,
- les figures 5a et 5b illustrent en vue schématique et en coupe la zone de transition entre un guide d'onde actif d'amplificateur SOA et un guide d'onde passif à fort confinement,
- les figures 6a et 6b illustrent en vue schématique et en coupe la zone de transition entre un guide d'onde passif à fort confinement et une photodiode.

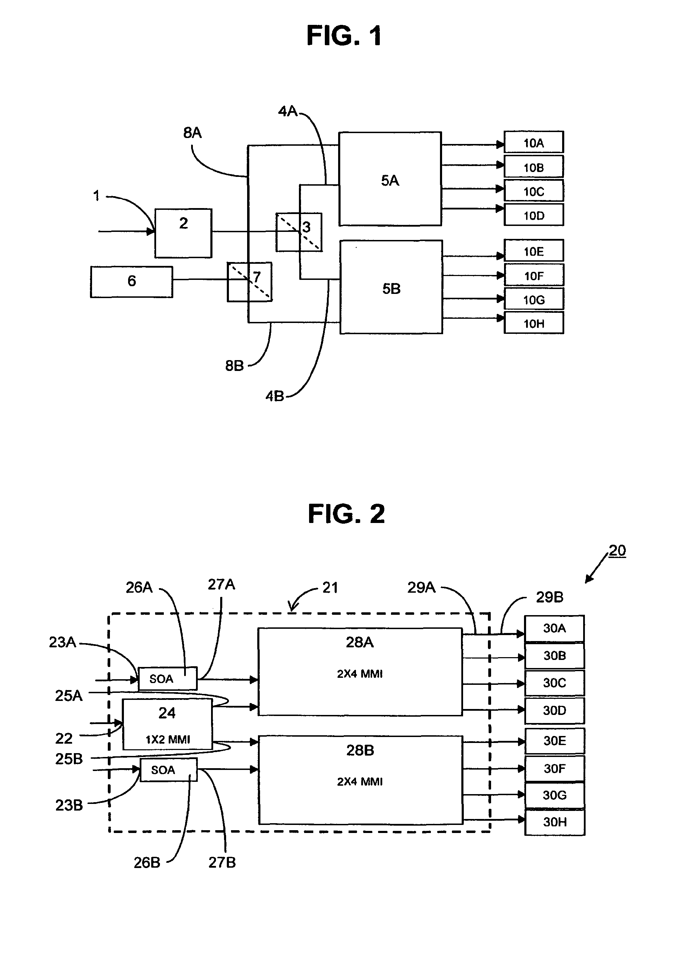

Le principe de la détection cohérente est rappelé sur la figure 1. Un signal optique est envoyé à l'entrée **1** du détecteur cohérent. Le signal optique est amplifié par un amplificateur optique **2,** puis envoyé en direction d'un séparateur de polarisation **3** qui décompose le signal optique en deux modes de propagation orthogonaux entre eux, correspondant respectivement au mode transverse magnétique TM et au mode transverse électrique TE du signal optique. Les deux modes de propagation résultant sont envoyés chacun respectivement dans un premier **4A** et un second **4B** bras. Le premier bras **4A** est relié à un premier mixeur cohérent **5A,** alors que le second bras **4B** est relié à un second mixeur cohérent **5B.** Un oscillateur local **6** génère un signal de référence qui est envoyé à un diviseur **7** qui divise le signal en deux répliques, chacune se propageant dans l'un des deux bras **8A** et **8B** qui alimentent respectivement les mixeurs cohérents **5A** et **5B.** Le mixeur cohérent **5A** alimente quatre photodiodes **10A-10D** qui transforment le signal optique en signal électrique. De même, le mixeur cohérent **5B** alimente quatre photodiodes **10E-10H** qui transforment le signal optique en signal électrique.

L'architecture d'un détecteur cohérent **20** amplifié compact, intégré de manière monolithique, comprenant un amplificateur optique à semiconducteur SOA à hétérostructure enterrée, est schématiquement illustré sur la figure 2.

La partie enterré **21** comprend une entrée LO **22** pour le signal de référence provenant de l'oscillateur local (pour « Local Oscillator » en anglais) et deux entrées **23A** et **23B** pour le signal optique contenant les données à réceptionner, une entrée pour chaque polarisation TM et TE respectivement. L'entrée LO **22** du signal de référence est reliée à un diviseur -3dB **24** du signal de référence, de type à interférences multimodes 1X2 MMI, qui divise le signal de référence en deux répliques envoyées chacune vers l'une des deux sorties du diviseur **24** vers les liaisons **25A** et **25B.**

Chacun des modes de polarisation TM et TE du signal optique entre dans le détecteur **20** par l'une des entrées **23A** et **23B.** Chaque entrée **23A, 23B** est respectivement reliée à un amplificateur optique à semiconducteur SOA **26A, 26B** ayant chacun une sortie pour la liaison **27A, 27B** avec les mixeurs cohérents **28A, 28B** respectivement. Les amplificateurs SOA **26A** et **26B** permettent d'amplifier séparément chaque polarisation du signal optique. L'amplificateur SOA **26A** et le diviseur **24** sont reliés par les liaisons **27A** et **25A** respectivement à un mixeur cohérent **28A** de type à interférences multimodes 2X4 MMI. L'amplificateur SOA **26B** et le diviseur **24** sont reliés par les liaisons **27B** et **25B** respectivement à un mixeur cohérent **28B** de type à interférences multimodes 2X4 MMI. Les mixeurs cohérents **28A, 28B,** respectivement associés à chaque polarisation du signal optique, sont utilisés pour démoduler le signal QPSK. Chacun des mixeurs cohérents **28A** et **28B** alimente un groupe de quatre photodiodes **30A-30D** et **30E-30H** respectivement, qui transforment le signal optique en signal électrique.

Un signal optique So, contenant les données à réceptionner et porté par la liaison **27A,** est combiné au signal de référence Sr, porté par la liaison **25A** en sortie du diviseur **24,** selon quatre lois différentes régissant chacune des sorties du mixeur cohérent **28A** reliée à une photodiode **30A-30D.** La photodiode **30A** reçoit un signal combiné égal à (So+Sr), la photodiode **30B** reçoit un signal combiné égal à (So-Sr), la photodiode **30C** reçoit un signal combiné égal à (So+iSr), la photodiode **30A** reçoit un signal combiné égal à (So-iSr).

La partie enterrée **21** du détecteur cohérent amplifié **20,** qui comprend le diviseur **24,** les amplificateurs SOA **26A** et **26B** et les mixeurs cohérents **28A, 28B,** utilise des guides d'onde enterrés permettant
- une faible dépendance à la polarisation dans les amplificateurs SOA **26A** et **26B,**
- des réflexions en retour réduites aux interfaces entre l'amplificateur SOA **26A, 26B** et un guide d'onde d'une part, et entre l'entrée et la sortie du mixeur cohérent **28A, 28B** d'autre part,
- des pertes de couplage faibles et
- des performances élevées des amplificateurs SOA **26A** et **26B.**

Les coupleurs à interférences multimodes MMI, utilisés pour réaliser les mixeurs cohérents **28A, 28B,** filtrent l'émission spontanée amplifiée ASE (pour « Amplified Spontaneous Emission » en anglais) générée par l'amplificateur SOA **26A** et **26B,** et donc améliorent le rapport signal optique sur bruit à l'entrée des photodiodes **30A-30D, 30E-30H.** Les photodiodes **30A-30D, 30E-30H** sont les seules parties du détecteur **20** qui utilisent un guide d'onde à gravure profonde « deep-ridge » pour atteindre une largeur de bande passante électrique supérieure à 25 GHz, et compatible dans des développements futurs avec une bande passante électrique supérieure à 100 GHz.

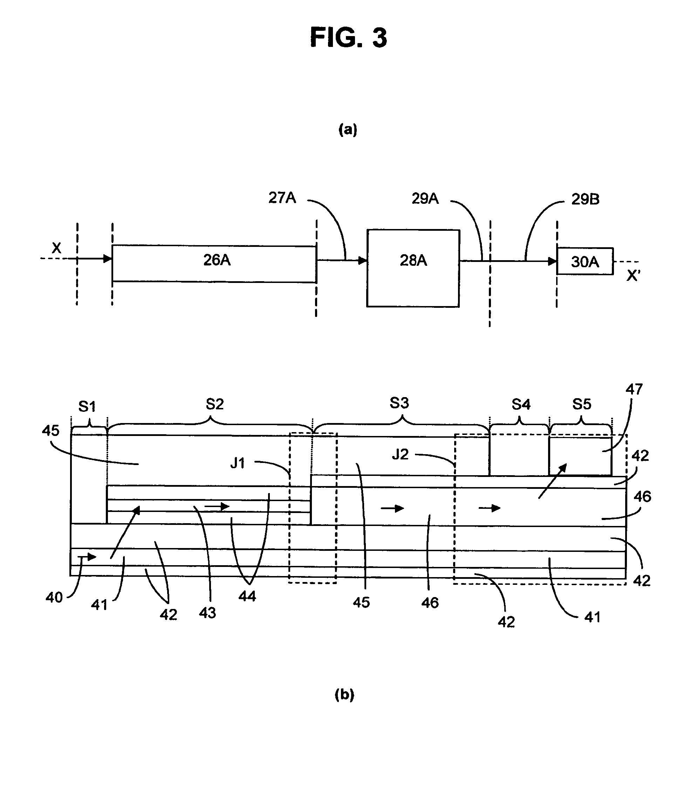

On considérera maintenant les figures 3a et 3b qui illustrent une vue partielle schématique du détecteur cohérent amplifié **20** intégré. La figure 3a illustre une partie de l'architecture du détecteur cohérent amplifié **20** intégré comprenant l'amplificateur optique SOA **26A** relié au mixeur cohérent **28A** par une liaison **27A** par guide d'onde, lui-même relié à la photodiode **30A** au moyen d'une liaison par guide d'onde comportant une partie enterrée **29A** et une partie non-enterrée **29B.** La figure 3b illustre le cheminement du signal **40** dans la partie du détecteur **20** illustrée sur la figure 3a. Cinq structures verticales différentes adjacentes, élaborées sur une plaque (« wafer ») commune semi-isolante de InP dopé p non représentée sur les figures, composent le détecteur cohérent intégré **20 :**
**(S1)** une semelle **41,** ou guide d'onde passif à base de InGaAsP à faible confinement (10-15% par exemple), placée entre deux couches de InP dopé n **42** qui sont utilisées pour obtenir une faible perte de couplage avec la fibre optique d'entrée (1,5 dB), l'ensemble étant enterré dans la matrice InP dopé p **45 ;**
**(S2)** un amplificateur SOA, comprenant un guide d'onde actif **43** (couche guidante) situé entre deux couches de confinement **44,** placé au-dessus de la semelle **41** encadrée de couches de InP dopé n **42,** l'ensemble étant enterré dans la matrice InP dopé p **45** grâce à une reprise d'épitaxie ;
**(S3)** un guide d'onde **passif 46** (couche guidante) à fort confinement (> 50%), recouvert d'une fine couche de InP dopé n **42,** placé au-dessus de la semelle **41** encadrée de couches de InP dopé n **42,** l'ensemble étant enterré dans la matrice InP dopé p **45** grâce à une reprise d'épitaxie ; cette structure **S3** est aussi utilisée pour réaliser le diviseur **24,** les mixeurs cohérents **28A** et **28B** de type à interférences multimodes 2X4 MMI et leurs guides d'onde d'entrée/sortie ;
**(S4)** le guide d'onde passif **46** à base de InGaAsP représentant une courte section, dit « planaire » car non limité latéralement, qui est recouvert seulement d'une très mince couche de InP dopé n **42** (< 100 nm), placé au-dessus de la semelle **41** encadrée de couches de InP dopé n **42 ;**
**(S5)** une photodiode qui comprend des couches de photodiodes **47** développées par croissance puis gravure profonde au-dessus du guide d'onde passif **46** à fort confinement dont elle est séparée par une couche mince de InP dopé n **42,** placée au-dessus de la semelle **41** encadrée de couches de InP dopé n **42.**

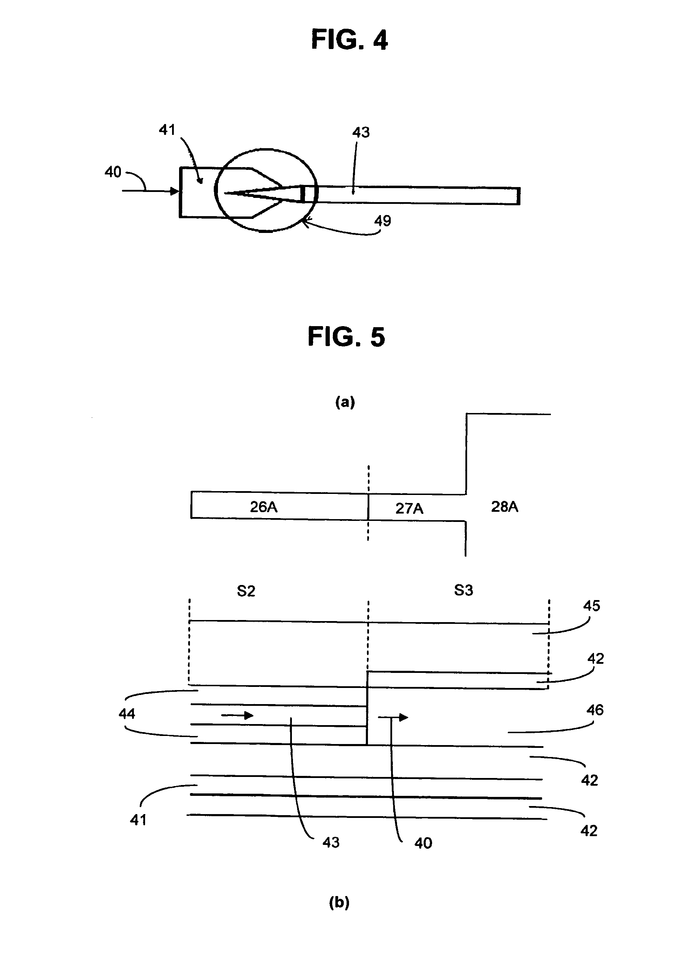

La figure 4 illustre en vue de dessus la zone d'adaptation de mode optique qui est disposée à l'une ou l'autre des entrées **23A, 23B** du signal optique dans le détecteur cohérent amplifié intégré **20.** Le signal optique **40** se propage dans la semelle **41.** Un adaptateur de mode optique SSC **49** (pour « Spot Size Converter » en anglais) à double coeur couple le signal optique provenant de la semelle **41** avec le guide d'onde actif **43** de l'amplificateur SOA (signal d'entrée), ou avec un guide d'onde passif (entrée LO), avec une faible perte de couplage (≈ 1,5 dB).

Les figures 5a et 5b illustrent la zone de transition **J1** entre les structures **S2** et **S3** de la figure 3b. La figure 5a illustre une partie de l'architecture du détecteur cohérent amplifié **20** intégré comprenant l'amplificateur optique SOA **26A** dont la sortie **27A** est reliée au mixeur cohérent **28A.** La figure 5b illustre le cheminement du signal **40** dans la partie du détecteur **20** illustrée sur la figure 5a, mettant en évidence la transition entre le guide d'onde actif **43** de l'amplificateur SOA **26A** et le guide d'onde passif **46** à fort confinement. Le signal optique **40** est couplé bout à bout entre le guide d'onde actif **43** de l'amplificateur SOA **26A** et le guide d'onde passif **46** à fort confinement, qui ont un mode guidé similaire, pour atteindre une grande efficacité de couplage entre les deux guides d'onde **43, 46** et pour minimiser la réflexion en retour dans l'amplificateur SOA **26A.** Le signal optique **40** est injecté dans le mixeur cohérent **28A** de type à interférences multimodes 2X4 MMI, qui utilise la même structure verticale **S3** que la liaison **27A** entre l'amplificateur optique **26A** et le mixeur cohérent **28A** comprenant le guide d'onde passif **46** à fort confinement.

Bien entendu la structure qui vient d'être décrite pour l'entrée dans le mixeur cohérent **28A** du signal issu de l'amplificateur SOA **26A** par la liaison **27A,** s'applique aussi à l'entée dans le mixeur cohérent **28B** du signal issu de l'amplificateur SOA **26B** par la liaison **27B.**

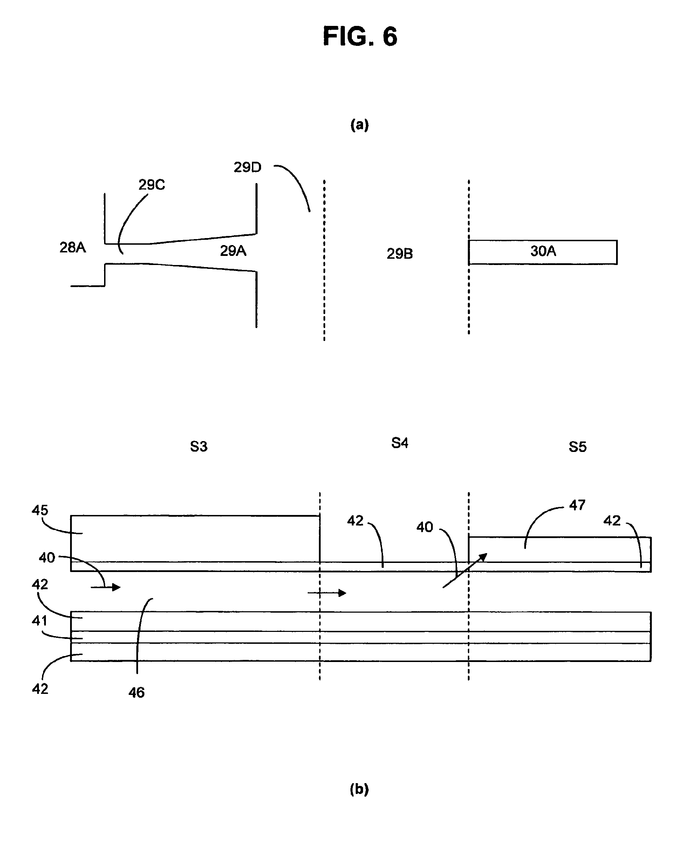

Les figures 6a et 6b illustrent la zone de transition **J2** entre les structures **S3** et **S5** de la figure 3a. La figure 6a illustre une partie de l'architecture du détecteur cohérent amplifié **20** intégré comprenant le mixeur cohérent **28A** relié à la photodiode **30A.** La figure 6b illustre le cheminement du signal **40** dans la partie du détecteur **20** illustrée sur la figure 6a, mettant en évidence la transition entre le guide d'onde passif **46** à fort confinement et la photodiode **47.** À la sortie du mixeur cohérent **28A,** le signal optique **40** est envoyé dans la liaison **29A, 29B** avec la photodiode **30A** qui comprend le guide d'onde passif **46** à fort confinement. La partie enterrée **29A** de la liaison possède la même structure verticale **S3** que le mixeur cohérent **28A** de type à interférences multimodes 2X4 MMI. La partie enterrée **29A** de la liaison, comprenant le guide d'onde passif **46** à fort confinement, d'abord étroite à l'une **29C** de ses extrémités, s'élargit latéralement à l'autre extrémité **29D** de la zone enterrée. Puis le signal optique **40** reste d'abord confiné dans le guide d'onde passif **46** à fort confinement dans la partie non-enterrée **29B** de la liaison (structure **S4)** où le guide d'onde passif **46** à fort confinement est planaire (i.e. non limité latéralement). Le signal optique **40** est ensuite absorbé de manière évanescente dans la zone active de la couche de photodiode **47.**

Le guide d'onde passif **46** à fort confinement a une épaisseur du même ordre de grandeur que celle du guide d'onde actif **43** de l'amplificateur SOA entouré de sa couche de confinement **44.** Cela favorise le couplage entre les deux guides d'onde **43, 44** et **46.** Des épaisseurs du même ordre permettent en outre de réaliser l'amplificateur SOA **43, 44** et le guide d'onde passif **46** à fort confinement en une seule étape en utilisant une même technologie de lithographie et de gravure pour les deux guides d'onde **43, 44** et **46.** On grave ensuite la semelle **41** pour réaliser l'adaptateur de mode optique **49** de la figure 4. L'ensemble obtenu est ensuite « enterré », par une reprise d'épitaxie, dans la matrice InP dopé p **45,** suivi du dépôt d'une couche de contact InGaAs. La matrice InP dopé p **45** est ensuite retirée dans une zone réservée destinée à recevoir la photodiode **47.** On procède à la croissance des couches de photodiode **47** dans cette zone, suivie de l'étape de gravure de la photodiode **47.** On réalise enfin les différentes étapes de métallisations, passivation et isolation nécessaires à la réalisation complète du détecteur cohérent amplifié intégré **20.**

Bien entendu, la présente invention n'est pas limitée aux modes de réalisation décrits, mais elle est susceptible de nombreuses variantes accessibles à l'homme de l'art sans que l'on s'écarte de l'esprit de l'invention.

## Revendications

1. Détecteur cohérent amplifié monolithique ayant
- au moins un mixeur cohérent incluant un diviseur à interférences multimodes, et
- au moins un amplificateur optique à semiconducteur reliée au mixeur cohérent,
- quatre photodiodes reliées au mixeur cohérent,
dans lequel l'amplificateur optique et le mixeur cohérent sont sous la forme d'une hétérostructure enterrée, et les photodiodes sont du type à gravure profonde.

2. Détecteur selon la revendication 1, comprenant en outre une entrée pour chacun des modes de propagation du signal optique contenant les données à réceptionner, chaque entrée étant respectivement reliée à un amplificateur optique.

3. Détecteur selon l'une des revendications 1 et 2, comprenant en outre une entrée pour un signal de référence provenant d'un oscillateur local reliée à un diviseur du signal de référence.

4. Détecteur selon l'une des revendications 2 et 3, dans lequel une sortie d'amplificateur optique et une sortie du diviseur du signal de référence sont reliées au mixeur cohérent.

5. Détecteur selon la revendication 1, comportant des structures verticales adjacentes
- une première structure est composée d'un guide d'onde passif à faible confinement, ou semelle, placé entre deux couches de InP dopé n,
- une deuxième structure d'amplificateur optique comprend un guide d'onde actif disposé entre deux couches de confinement qui est placé au-dessus de la semelle encadrée de couches de InP dopé n,
- une troisième structure de mixeur cohérent comprend un guide d'onde passif à fort confinement recouvert d'une couche mince de InP dopé n qui est placé au-dessus de la semelle encadrée de couches de InP dopé n,
les première, deuxième et troisième structures étant enterrées dans une matrice de InP dopé p.

6. Détecteur selon la revendication 5, comportant en outre
- une quatrième structure de courte section comprend un guide d'onde passif à fort confinement recouvert d'une couche de InP dopé n qui est placé au-dessus de la semelle encadrée de couches de InP dopé n,
- une cinquième structure comprend des couches de photodiode qui sont placées au-dessus du guide d'onde passif à fort confinement recouvert de la couche de InP dopé n et de la semelle encadrée de couches de InP dopé n.

7. Détecteur selon l'une des revendications 5 et 6, dans lequel un adaptateur de mode optique, placé à chaque entrée du signal optique, couple le signal optique provenant de la semelle avec le guide d'onde actif de l'amplificateur optique.

8. Détecteur selon l'une des revendications 5 et 6, dans lequel un adaptateur de mode optique, placé à l'entrée du signal de référence provenant d'un oscillateur local, couple le signal optique provenant de la semelle avec le guide d'onde passif à fort confinement du mixeur cohérent.

9. Détecteur selon l'une des revendications 7 et 8, dans lequel la transition permettant le couplage est réalisée par un biseau du guide d'onde.

10. Détecteur selon l'une des revendications 5 à 9, dans lequel le guide d'onde actif entouré de couches de confinement de l'amplificateur optique et le guide d'onde passif à fort confinement du mixeur cohérent ont un mode guidé similaire et une épaisseur du même ordre.

11. Procédé de fabrication d'un détecteur cohérent amplifié monolithique selon l'une des revendications précédentes, comprenant
- on dépose des couches superposées composant l'hétérostructure enterrée,
- on réalise en une seule étape de lithographie et gravure le guide d'onde actif entouré de couches de confinement de l'amplificateur optique et le guide d'onde passif à fort confinement du mixeur cohérent,
- on réalise un adaptateur de mode optique par gravure de la semelle,
- on enterre l'ensemble composé de la semelle, l'amplificateur optique et lemixeur cohérent, dans une matrice InP dopé p,

12. Procédé selon la revendication 11, comprenant en outre :
- on retire la matrice de InP dopé p dans une zone réservée,
- on fait croître des couches de photodiode dans la zone réservée,
- on réalise la photodiode par la technique de gravure profonde jusqu'à la couche de InP dopé n.
